# EUROPÄISCHE PATENTANMELDUNG

(11) **EP 4 528 432 A1**
(43) Veröffentlichungstag der Anmeldung: **26.03.2025**
(21) Anmeldenummer: 23199509.3
(22) Anmeldetag: 25.09.2023
(51) Int. Cl.: G06F 3/01, G06T 13/40

(54) **VERFAHREN ZUM GENERIEREN EINER VIRTUELLEN PERSON FÜR EINE INTERAKTION MIT EINER REALEN PERSON MITTELS EINES SYSTEMS, COMPUTERPROGRAMMPRODUKT, COMPUTERLESBARES SPEICHERMEDIUM SOWIE SYSTEM**

(71) Anmelder: Siemens Aktiengesellschaft, 80333 München (DE)
(72) Erfinder: Johnson, Rebecca, 81739 München (DE)
(74) Vertreter: Siemens Patent Attorneys

(57) **Zusammenfassung**

Die Erfindung betrifft ein Verfahren zum Generieren einer virtuellen Person (12) für eine Interaktion (24) mit einer realen Person (14) mittels eines Systems (10) zur Ausgabe der virtuellen Person (12), mit den Schritten:
- Bereitstellen eines digitalen Modells (26) für virtuelle Personen (12) mittels einer elektronischen Recheneinrichtung (16) des Systems (10);
- Erfassen einer Anpassungseingabe (28) von einem Nutzer der elektronischen Recheneinrichtung (16), wobei die Anpassungseingabe (28) zumindest einem virtuellen Persönlichkeitsparameter für die virtuelle Person (12) entspricht;
- Anpassen eines Persönlichkeitsprofils (30) des digitalen Modells (26) in Abhängigkeit von der Anpassungseingabe (28) zur virtuellen Person (12) mittels der elektronischen Recheneinrichtung (16);
- Übermitteln der virtuellen Person (12) mit dem angepassten Persönlichkeitsprofil (30) an eine Ausgabeeinrichtung (18) des Systems (10); und
- Ausgeben der virtuellen Person (12) zur Interaktion (24) mit der realen Person (14) mittels der Ausgabeeinrichtung (18) .

Ferner betrifft die Erfindung ein Computerprogrammprodukt, ein computerlesbares Speichermedium sowie ein System (10).

## Beschreibung

Die Erfindung betrifft ein Verfahren zum Generieren einer virtuellen Person für eine Interaktion mit einer realen Person mittels eines Systems zur Ausgabe der virtuellen Person. Ferner betrifft die Erfindung ein Computerprogrammprodukt, ein computerlesbares Speichermedium sowie ein System.

Das Benutzererlebnis während einer Kommunikation mit einem digitalen Assistenten, insbesondere einer virtuellen Person, leidet unter fehlender Empathie und gebotenem Kontext. Eine Unterhaltung ist nicht möglich, da ein digitaler Assistent nur über eine Reihe an Eigenschaften verfügt und ansonsten das Wissen aus beispielsweise dem Internet, wie Wikipedia, wiedergibt. Die Unterhaltung ist reduziert auf eine reine Wissensabfrage und entsprechend für reale Personen nur schwer genießbar. Dies führt zu keiner Wiederkehr und zu keinem einmaligen und dadurch merkenswerten Austausch.

Das Aussehen beziehungsweise das so genannte User Interface (UI) eines digitalen Assistenten wird abgekoppelt von einer Persönlichkeit entworfen. Die Wissensbasis wird ohne Empathie befüllt. Gerade mit einer Einführung von generativen künstlichen Intelligenz-Dialogframeworks, wie beispielsweise Chat-GPT, ist es willkürlich, ob eine Frage humorvoll oder sarkastisch, ausführlich oder kurz und knapp beantwortet wird. Diese Frameworks haben keine Verkörperung und keine Empathie. Die Empathie ist aber für eine persistente Wissensübertragung an das menschliche Gehirn elementar.

Aufgabe der vorliegenden Erfindung ist es, ein Verfahren, ein Computerprogrammprodukt, ein computerlesbares Speichermedium sowie ein System zu schaffen, mittels welchen eine verbesserte Kommunikation zwischen einer realen Person und einer virtuellen Person realisiert werden kann.

Diese Aufgabe wird durch ein Verfahren, ein Computerprogrammprodukt, ein computerlesbares Speichermedium sowie einem System gemäß den unabhängigen Patentansprüchen gelöst. Vorteilhafte Ausgestaltungsformen sind in den Unteransprüchen angegeben.

Ein Aspekt der Erfindung betrifft ein Verfahren zum Generieren einer virtuellen Person für eine Interaktion mit einer realen Person mittels eines Systems zur Ausgabe der virtuellen Person. Es wird ein digitales Modell für virtuelle Personen mittels einer elektronischen Recheneinrichtung des Systems bereitgestellt. Es erfolgt das Erfassen einer Anpassungseingabe von einem Nutzer der elektronischen Recheneinrichtung, wobei die Anpassungseingabe zumindest einem virtuellen Persönlichkeitsparameter für die virtuelle Person entspricht. Es wird ein Persönlichkeitsprofil des digitalen Modells in Abhängigkeit von der Anpassungseingabe zur virtuellen Person mittels der elektronischen Recheneinrichtung angepasst. Es erfolgt das Übermitteln der virtuellen Person mit dem angepassten Persönlichkeitsprofil an eine Ausgabeeinrichtung des Systems und das Ausgeben der virtuellen Person zur Interaktion mit der realen Person mittels der Ausgabeeinrichtung.

Somit kann eine verbesserte Kommunikation zwischen der virtuellen Person und der realen Person realisiert werden.

Insbesondere ist somit vorgeschlagen, dass ein initiales digitales Modell für virtuelle Personen bereitgestellt wird. Ein Nutzer, beispielsweise ein Programmierer für die virtuelle Person, kann dann eine entsprechende Anpassungseingabe vornehmen, um dem digitalen Modell Persönlichkeitsparameter, beispielsweise charakterliche Eigenschaften der virtuellen Person, mitzugeben. Das digitale Modell wird dann in Abhängigkeit dieser Anpassungseingabe entsprechend angepasst und mit einem individuellen Persönlichkeitsprofil versehen. Das digitale Modell mit dem angepassten Persönlichkeitsprofil wird dann für eine Ausgabeeinrichtung bereitgestellt, so dass eine Person, insbesondere ein Endnutzer, mit der virtuellen Person kommunizieren kann.

Insbesondere erfolgt somit in Abhängigkeit von der Anpassungseingabe eine Veränderung des vorgegebenen digitalen Modells und in Abhängigkeit davon kann eine Kommunikation zwischen der realen Person und der digitalen Person realitätsnah durchgeführt werden.

Durch das entsprechende Persönlichkeitsprofil ist insbesondere vorgesehen, dass eine Kommunikation stattfindet, wie dies auch mit einer realen Person durchgeführt werden kann. Die virtuelle Person interagiert somit nicht nur mit reinem Wissen, beispielsweise durch eine Abfrage im Internet, sondern kann auch entsprechend charakterliche Eigenschaften, wie Sarkasmus, Wut, Freude oder dergleichen mit in die Kommunikation einfließen lassen. Somit wird der digitalen Person eine digitale Persönlichkeit zugeordnet, welche die Ausgabe der virtuellen Person und somit die Kommunikation beeinflusst. Somit kann eine verbesserte Kommunikation mit der realen Person durchgeführt werden, da die reale Person eine Empathie mit der virtuellen Person aufbauen kann, wodurch eine persistente Wissensübertragung realisiert werden kann.

Insbesondere ist somit der Unterschied gemäß dem Stand der Technik die Erweiterung durch ein Dialogsystem mit den digitalisierten Charaktereigenschaften beziehungsweise beispielsweise einem Lebenshintergrund, und die daraus entstehende Persönlichkeit und emotionale, menschenähnliche Reaktion der virtuellen Person.

Insbesondere sieht somit die Erfindung vor, dass beispielsweise charakterliche Eigenschaften, beziehungsweise auch ein vergangenes Persönlichkeitsprofil, der virtuellen Person eine Persönlichkeit gibt. Diese Persönlichkeit wird in entsprechenden Antworten, in Reaktionen sowie im Aussehen der virtuellen Person widergespiegelt.

Gemäß einer vorteilhaften Ausgestaltungsform wird die Ausgabeeinrichtung als Anzeigeeinrichtung bereitgestellt. Beispielsweise kann die Anzeigeeinrichtung in Form eines Displays bereitgestellt werden. Es kann dann eine Art Avatar, insbesondere in Form eines Menschen, entsprechend bereitgestellt werden. Dabei kann die virtuelle Person sowohl personalisierte beziehungsweise individualisierte Kleidung sowie Gesichtszüge, Haarfarbe oder dergleichen aufweisen. Die Anzeigeeinrichtung ist dabei beispielsweise in Lebensgröße ausgebildet, so dass die virtuelle Person auf der Anzeigeeinrichtung auch in Lebensgröße dargestellt wird. Somit kann eine verbesserte Interaktion zwischen der realen Person und der virtuellen Person realisiert werden.

Ebenfalls vorteilhaft ist, wenn die virtuelle Person als Avatar angezeigt wird. Bei einem Avatar handelt es sich insbesondere um eine virtuelle beziehungsweise künstliche Person in der Form einer Graphikfigur, die insbesondere die Verkörperung einer Person darstellt. Mit anderen Worten kann die virtuelle Person als digitale Person, insbesondere mit entsprechenden Körper-Extremitäten, Gesichtszügen und dergleichen dargestellt werden. Insbesondere kann der Avatar auch in Abhängigkeit von dem Ausgabesignal zur Ausgabe des Avatars entsprechend Bewegungen des Gesichts und des Körpers durchführen. Beispielsweise kann beim Sprechend des Avatars entsprechende Mundbewegungen ausgeben werden. Somit kann eine äußerst realitätsnahe Kommunikation zwischen der realen Person und der virtuellen Person, insbesondere dem Avatar, realisiert werden.

Ebenfalls vorteilhaft ist, wenn eine Eingabe der realen Person mittels einer Erfassungseinrichtung des Systems erfasst wird und eine Reaktion der virtuellen Person in Abhängigkeit von der Eingabe und in Abhängigkeit von dem angepassten Persönlichkeitsprofil ausgegeben wird. Beispielsweise kann die Erfassungseinrichtung in Form einer Kamera oder in Form einer Mikrofoneinrichtung ausgebildet sein. Eine entsprechende Spracheingabe beziehungsweise optische Eingabe, beispielsweise eine Bewegung der realen Person, kann somit durch die virtuelle Person erfasst werden. Eine entsprechende Bewegung beziehungsweise Sprache kann dann mittels der elektronischen Recheneinrichtung ausgewertet werden und eine Reaktion, insbesondere in Abhängigkeit von dem Persönlichkeitsprofil durch die virtuelle Person initiiert werden. Somit kann auf entsprechende Eingaben der realen Person reagiert werden, wodurch eine äußerst realitätsnahe Kommunikation, insbesondere situationsabhängig, realisiert werden kann.

Es hat sich weiterhin als vorteilhaft erwiesen, wenn eine Spracheingabe der realen Person und/oder eine Gestik der realen Person und/oder Mimik der realen Person als Eingabe erfasst wird. Insbesondere können somit die entsprechenden menschlichen Emotionen der realen Person von der virtuellen Person erfasst werden und entsprechend ausgewertet werden. Hierzu kann insbesondere eine entsprechende Datenbank vorliegen, welche beispielsweise entsprechende Auswertungen durchführt und entsprechende Reaktionen auf Basis des Persönlichkeitsprofils hinterlegt sind. Insbesondere wertet somit die elektronische Recheneinrichtung die erfasste Eingabe aus und verknüpft diese mit Reaktionen für die virtuelle Person. Somit kann situationsabhängig und höchstindividuell auf die reale Person eingegangen werden, wodurch eine realitätsnahe Kommunikation zwischen der realen Person und der virtuellen Person realisiert werden kann.

Eine weitere vorteilhafte Ausgestaltungsform sieht vor, dass eine Sprachausgabe der virtuellen Person und/oder eine Gestik der virtuellen Person und/oder eine Mimik der virtuellen Person in Abhängigkeit von der Eingabe angepasst wird. Insbesondere können somit auch die entsprechenden Gestiken, Mimiken beziehungsweise Sprachausgaben in Abhängigkeit von der Eingabe angepasst werden. Somit kann eine menschliche Reaktion durch die virtuelle Person nachgestellt werden, wodurch die Kommunikation zwischen der virtuellen Person und der realen Person äußerst realitätsnah generiert werden kann.

Es hat sich weiterhin als vorteilhaft erwiesen, wenn mittels einer künstlichen Intelligenz der elektronischen Recheneinrichtung das Persönlichkeitsprofil angepasst wird. Insbesondere kann beispielsweise die elektronische Recheneinrichtung ein neuronales Netzwerk aufweisen, welches wiederum das Persönlichkeitsprofil entsprechend anpassen kann. Insbesondere kann beispielsweise auch im laufenden Betrieb der virtuellen Person das Persönlichkeitsprofil, insbesondere kontinuierlich, angepasst werden. Somit kann beispielsweise auch nach Betriebsbeginn eine Anpassung des Persönlichkeitsprofils durchgeführt werden. Insbesondere kann somit die virtuelle Person beispielsweise auf entsprechende Eingaben durch die Person reagieren beziehungsweise auch auf aktuelle Ereignisse eine entsprechende Reaktion aufbauen. Diese Ereignisse werden abgespeichert und als Trainingsdaten für eine Anpassung des Persönlichkeitsprofils verwendet. Somit kann höchstaktuell die Kommunikation durchgeführt werden.

Ebenfalls vorteilhaft ist, wenn ein Verhalten der realen Person erfasst und gespeichert wird und das Persönlichkeitsprofil der virtuellen Person in Abhängigkeit von dem erfassten Verhalten angepasst wird. Sollte beispielsweise die reale Person dauerhaft zu Terminen zu spät erscheinen, so kann dies entsprechend abgespeichert werden, und beispielsweise bei dem Persönlichkeitsprofil der virtuellen Person angepasst werden. Beispielsweise kann dann die virtuelle Person entsprechende Reaktionen auf das dauerhafte Zuspätkommen ausgeben, und beispielsweise verärgert reagieren. Insbesondere kann somit vorgesehen sein, dass mittels der virtuellen Person eine Identifizierung von realen Personen durchgeführt werden kann. Hierzu kann beispielsweise die elektronische Recheneinrichtung einen entsprechenden Erkennungsalgorithmus, beispielsweise einen Objekterkennungsalgorithmus aufweisen. Somit kann verhaltensangepasst an die reale Person die virtuelle Person beziehungsweise das Persönlichkeitsprofil der virtuellen Person angepasst werden.

Es hat sich weiterhin als vorteilhaft erwiesen, wenn als Anpassungseingabe eine virtuelle Hintergrundgeschichte für die virtuelle Person eingegeben wird. Insbesondere kann somit der virtuellen Person eine Art vergangenes Leben vorgeschlagen werden, beispielsweise ein Familienstand, charakterliche Eigenschaften sowie Erfahrungen, welche wiederum die Persönlichkeit der virtuellen Person beeinflussen können. Insbesondere auf Basis dieser Hintergrundgeschichten kann somit die virtuelle Person beispielsweise entsprechende Antworten beziehungsweise Reaktionen innerhalb der Kommunikation mit der realen Person mit einfließen lassen, wodurch die Kommunikation mit der realen Person realitätsnah bereitgestellt werden kann.

Ferner hat es sich als vorteilhaft erwiesen, wenn ein Einsatzort der virtuellen Person erfasst wird und das Persönlichkeitsprofil in Abhängigkeit von dem Einsatzort angepasst wird. Sollte beispielsweise die virtuelle Person innerhalb einer Industrieumgebung eingesetzt werden, so kann das Persönlichkeitsprofil entsprechend angepasst werden, so dass die virtuelle Person in der Industrieumgebung ein Persönlichkeitsprofil für die Industrieumgebung aufweist. Beispielsweise können entsprechende genutzte Begrifflichkeiten sowie angezeigte Kleidung in Abhängigkeit von dem Einsatzort angepasst werden.

Eine weitere vorteilhafte Ausgestaltungsform sieht vor, dass in einem Einsatzort der virtuellen Person eine Vielzahl von Ausgabeeinrichtungen bereitgestellt wird und die virtuelle Person mit der Vielzahl von Ausgabeeinrichtungen ausgegeben wird. Beispielsweise kann dann die virtuelle Person an unterschiedlichen Orten entsprechend angezeigt werden. Insbesondere können beispielsweise an unterschiedlichen Orten unterschiedliche Displayeinrichtungen bereitgestellt werden, um die virtuelle Person darauf gezeigt werden. Somit ist die virtuelle Person nicht nur an einem Ort ansprechbar, sondern es sind unterschiedliche Orte innerhalb des Einsatzortes möglich, an denen die virtuelle Person eingesetzt werden kann und somit eine Kommunikation mit der virtuellen Person an unterschiedlichen Einsatzorten durchgeführt werden kann.

Es hat sich weiterhin als vorteilhaft erwiesen, wenn an unterschiedlichen Ausgabeeinrichtungen mit unterschiedlichen Personen interagiert wird. Somit kann an unterschiedlichen Einsatzorten mit unterschiedlichen Personen interagiert werden, so dass beispielsweise parallel auch mit unterschiedlichen Personen interagiert werden kann. Somit ist die virtuelle Person flexibel innerhalb eines Einsatzortes einsetzbar.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung daher auch ein computerlesbares Speichermedium mit dem Computerprogrammprodukt.

Ein nochmals weiterer Aspekt der Erfindung betrifft ein System zum Generieren einer virtuellen Person für eine Interaktion mit einer realen Person, mit zumindest einer elektronischen Recheneinrichtung und einer Ausgabeeinrichtung, wobei das System zum Durchführen eines Verfahrens nach dem vorhergehenden Aspekt ausgebildet ist. Insbesondere wird das Verfahren mittels des Systems durchgeführt.

Vorteilhafte Ausgestaltungsformen des Verfahrens sind als vorteilhafte Ausgestaltungsformen des Computerprogrammprodukts, des computerlesbaren Speichermediums sowie des Systems anzusehen. Das System weist hierzu insbesondere gegenständliche Merkmale auf, um entsprechende Verfahrensschritt durchführen zu können.

Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebenen Kategorie für eine Klassifizierungsaufgabe, einen oder mehrere prädizierte Werte oder eine prädizierte Sequenz beinhalten kann.

Im Rahmen der vorliegenden Offenbarung kann ein Objekterkennungsalgorithmus, beispielsweise zum Erkennen/Identifizieren der realen Person, als ein Computeralgorithmus verstanden werden, der in der Lage ist, eines oder mehrere Objekte innerhalb eines bereitgestellten Eingangsdatensatzes, beispielsweise Eingangsbildes, zu identifizieren und zu lokalisieren, beispielsweise indem er entsprechende Begrenzungsboxen oder Bereiche von Interesse, ROI (englisch: "region of interest"), festlegt und insbesondere jeder der Begrenzungsboxen eine entsprechende Objektklasse zuordnet, wobei die Objektklassen aus einem vordefinierten Satz von Objektklassen ausgewählt werden können. Dabei kann die Zuweisung einer Objektklasse zu einer Begrenzungsbox derart verstanden werden, dass ein entsprechender Konfidenzwert oder eine Wahrscheinlichkeit dafür, dass das innerhalb der Begrenzungsbox identifizierte Objekt zu der entsprechenden Objektklasse gehört, bereitgestellt wird. Zum Beispiel kann der Algorithmus für eine gegebene Begrenzungsbox für jede der Objektklassen einen solchen Konfidenzwert oder eine Wahrscheinlichkeit bereitstellen. Die Zuweisung der Objektklasse kann zum Beispiel die Auswahl oder Bereitstellung der Objektklasse mit dem größten Konfidenzwert oder der größten Wahrscheinlichkeit beinhalten. Alternativ kann der Algorithmus auch lediglich die Begrenzungsboxen festlegen, ohne eine entsprechende Objektklasse zuzuordnen.

Algorithmen zur automatischen visuellen Wahrnehmung, die auch als Computer-Vision-Algorithmen, Algorithmen zum maschinellen Sehen oder Machine-Vision-Algorithmen bezeichnet werden können, können als Computeralgorithmen zur automatischen Durchführung einer visuellen Wahrnehmungsaufgabe betrachtet werden. Eine visuelle Wahrnehmungsaufgabe, die auch als Computer-Vision-Aufgabe bezeichnet wird, kann beispielsweise als eine Aufgabe zur Extraktion von visuellen Informationen aus Bilddaten verstanden werden. Insbesondere kann die visuelle Wahrnehmungsaufgabe in einigen Fällen prinzipiell von einem Menschen ausgeführt werden, der in der Lage ist, ein den Bilddaten entsprechendes Bild visuell wahrzunehmen. Im vorliegenden Zusammenhang werden visuelle Wahrnehmungsaufgaben jedoch auch automatisch durchgeführt, ohne dass die Unterstützung eines Menschen erforderlich ist.

Ein Computer-Vision-Algorithmus, beispielsweise zum Erkennen/Identifizieren der realen Person beziehungsweis zum Auswerten einer Gestik oder Mimik der realen Person, kann beispielsweise einen Bildverarbeitungsalgorithmus oder einen Algorithmus zur Bildanalyse enthalten, der durch maschinelles Lernen trainiert wird oder wurde und beispielsweise auf einem künstlichen neuronalen Netzwerk, insbesondere einem faltenden neuronalen Netz, basieren kann. Der Computer-Vision-Algorithmus kann beispielsweise einen Objekterkennungsalgorithmus, einen Hinderniserkennungsalgorithmus, einen Objektverfolgungsalgorithmus, einen Klassifikationsalgorithmus einen semantischen Segmentierungsalgorithmus, und/oder einen Tiefenschätzalgorithmus umfassen.

Entsprechende Algorithmen können analog auch basierend auf anderen Eingabedaten als von einem Menschen visuell wahrnehmbaren Bildern durchgeführt werden. Beispielsweise können auch Punktwolken oder Bilder von Infrarotkameras, Lidarsystemen et cetera mittels entsprechend angepasster Computeralgorithmen ausgewertet werden. Streng genommen handelt es sich bei den entsprechenden Algorithmen nicht um Algorithmen zur visuellen Wahrnehmung, da die entsprechenden Sensoren in Bereichen arbeiten können, die visuell, also für das menschliche Auge, nicht wahrnehmbar sind, zum Beispiel im Infrarotbereich. Deshalb werden solche Algorithmen im Rahmen der vorliegenden Erfindung Algorithmen zur automatischen Wahrnehmung bezeichnet. Algorithmen zur automatischen Wahrnehmung schließen also Algorithmen zur automatischen visuellen Wahrnehmung ein, sind aber im Hinblick auf eine menschliche Wahrnehmung nicht auf diese beschränkt. Folglich kann ein Algorithmus zur automatischen Wahrnehmung nach diesem Verständnis einen Computeralgorithmus zur automatischen Durchführung einer Wahrnehmungsaufgabe enthalten, der beispielsweise durch maschinelles Lernen trainiert wird oder wurde und insbesondere auf einem künstlichen neuronalen Netzwerk basieren kann. Zu solchen verallgemeinerten Algorithmen zur automatischen Wahrnehmung können auch Objektdetektionsalgorithmen, Objektverfolgungsalgorithmen, Klassifizierungsalgorithmen und/oder Segmentierungsalgorithmen, zum Beispiel semantische Segmentierungsalgorithmen, gehören.

Falls ein künstliches neuronales Netzwerk zur Implementierung eines Algorithmus zur automatischen visuellen Wahrnehmung verwendet wird, ist eine häufig eingesetzte Architektur die eines faltendes neuronales Netzwerks, CNN. Insbesondere kann ein 2D-CNN auf entsprechende 2D-Kamerabilder angewendet werden. Auch für andere Algorithmen zur automatischen Wahrnehmung können CNNs verwendet werden. Beispielsweise können 3D-CNNs, 2D-CNNs oder 1D-CNNs auf Punktwolken angewendet werden, abhängig von den räumlichen Dimensionen der Punktwolke und den Details der Verarbeitung.

Das Ergebnis oder die Ausgabe eines Algorithmus zur automatischen Wahrnehmung ist abhängig von der spezifischen zugrundeliegenden Wahrnehmungsaufgabe. Beispielsweise kann die Ausgabe eines Objekterkennungsalgorithmus eine oder mehrere Begrenzungsboxen enthalten, die eine räumliche Position und optional eine Orientierung eines oder mehrerer entsprechender Objekte in der Umgebung und/oder entsprechende Objektklassen für das eine oder die mehreren Objekte definieren. Eine Ausgabe eines semantischen Segmentierungsalgorithmus, der auf ein Kamerabild angewendet wird, kann eine Klasse auf Pixelebene für jedes Pixel des Kamerabildes enthalten. Analog dazu kann eine Ausgabe eines semantischen Segmentierungsalgorithmus, der auf eine Punktwolke angewendet wird, eine entsprechende Punktebenen-Klasse für jeden der Punkte enthalten. Die Klassen auf Pixelebene beziehungsweise auf Punktebene können beispielsweise einen Objekttyp definieren, zu dem der jeweilige Pixel oder Punkt gehört.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCR_AM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

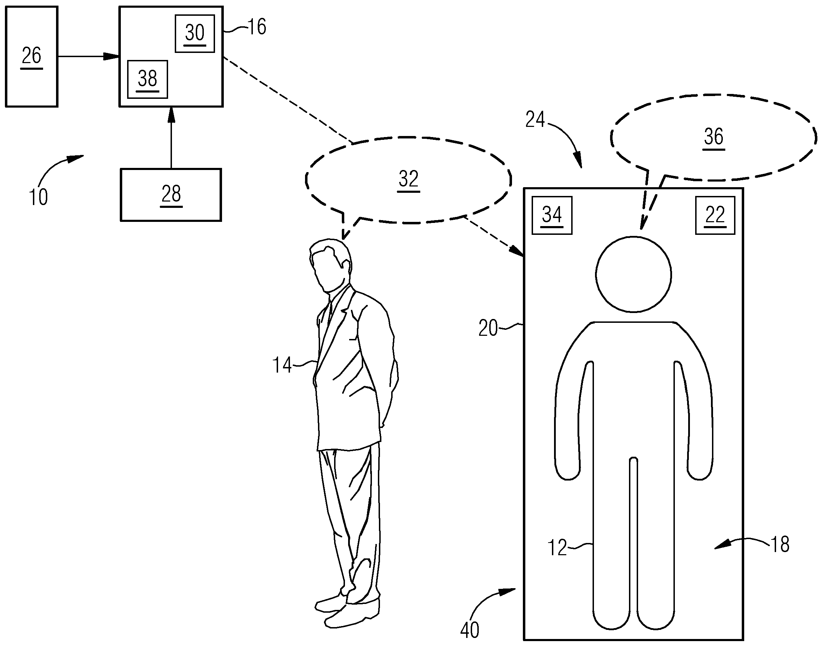

Dabei zeigt die einzige Figur:
- FIG: ein schematisches Blockschaltbild gemäß einer Ausführungsform eines Systems.

In der FIG sind gleiche oder funktionsgleiche Elemente mit den gleichen Bezugszeichen versehen.

Die FIG zeigt ein schematisches Blockschaltbild gemäß einer Ausführungsform eines Systems 10. Das System 10 ist zum Generieren einer virtuellen Person 12 für eine Interaktion 24 mit einer realen Person 14 ausgebildet. Das System 10 weist hierzu zumindest eine elektronische Recheneinrichtung 16 sowie zumindest eine Ausgabeeinrichtung 18 auf. Im vorliegenden Ausführungsbeispiel ist die Ausgabeeinrichtung 18 beispielsweise als optische Anzeigeeinrichtung 20 ausgebildet, und weist hierzu beispielsweise ferner noch eine Mikrofoneinrichtung 22 zum Ausgeben einer Sprachausgabe auf.

Insbesondere zeigt die FIG ein Verfahren zum Generieren der virtuellen Person 12 für eine Interaktion 24 mit der realen Person 14. Es wird ein digitales Modell 26 für virtuelle Personen 12 mittels der elektronischen Recheneinrichtung 16 bereitgestellt. Es erfolgt das Erfassen einer Anpassungseingabe 28 von einem Nutzer der elektronischen Recheneinrichtung 16, wobei die Anpassungseingabe 28 einem virtuellen Persönlichkeitsprofil für die virtuelle Person entspricht. Es erfolgt das Anpassen eines Persönlichkeitsprofils 30 des digitalen Modells 26 in Abhängigkeit von der Anpassungseingabe 28 zur virtuellen Person 12 mittels der elektronischen Recheneinrichtung 16. Es wird dann die virtuelle Person 12 mit dem angepassten Persönlichkeitsprofil an die Ausgabeeinrichtung 18 des Systems 10 übermittelt. Es erfolgt dann das Ausgeben der virtuellen Person 12 zur Interaktion 24 mit der realen Person 14 mittels der Ausgabeeinrichtung 18.

Insbesondere zeigt die FIG, dass die virtuelle Person 12 als Avatar angezeigt werden kann.

Ferner kann vorgesehen sein, dass eine Eingabe 32 der realen Person 14 mittels einer Erfassungseinrichtung 34 des Systems 10 erfasst wird und eine Reaktion 36 der virtuellen Person 12 in Abhängigkeit von der Eingabe 32 und in Abhängigkeit von dem angepassten Persönlichkeitsprofil 30 ausgegeben wird. Hierzu kann beispielsweise vorgesehen sein, dass eine Spracheingabe der realen Person 14 und/oder eine Gestik der realen Person 14 und/oder eine Mimik der realen Person 14 als Eingabe 32 erfasst wird. Ferner kann eine Sprachausgabe der virtuellen Person 12 und/oder eine Gestik der virtuellen Person 12 und/oder Mimik der virtuellen Person 12 in Abhängigkeit von der Eingabe 32 angepasst werden.

Ferner kann vorgesehen sein, dass mittels einer künstlichen Intelligenz 38 der elektronischen Recheneinrichtung 16 das Persönlichkeitsprofil 30 angepasst wird.

Weiterhin kann vorgesehen sein, dass ein Verhalten der realen Person 14 erfasst wird und gespeichert wird und das Persönlichkeitsprofil 30 der virtuellen Person 12 in Abhängigkeit von dem erfassten Verhalten angepasst wird.

Insbesondere kann vorgesehen sein, dass als Anpassungseingabe 28 eine virtuelle Hintergrundgeschichte für die virtuelle Person 12 eingegeben wird.

Ferner kann vorgesehen sein, dass ein Einsatzort 40 der virtuellen Person 12 erfasst wird und das Persönlichkeitsprofil 30 in Abhängigkeit von dem Einsatzort 40 angepasst wird. Des Weiteren kann in einem Einsatzort 40 der virtuellen Person 12 eine Vielzahl von Ausgabeeinrichtungen 18 bereitgestellt werden und die virtuelle Person 12 mittels der Vielzahl von Ausgabeeinrichtungen 18 ausgegeben werden. Ebenfalls ist es möglich, dass an den unterschiedlichen Ausgabeeinrichtungen 18 dann mit unterschiedlichen Personen 14 interagiert wird.

Insbesondere beschreibt somit die FIG die Einführung einer Vergangenheit und einer Eigenschaft für die virtuelle Person 12, wodurch ein Persönlichkeitsprofil 30 für die virtuelle Person 12 erzeugt wird. Die Persönlichkeit wird in den Antworten, der Reaktion 36 und im Aussehen der virtuellen Person 12 widergespiegelt.

Gibt man beispielsweise einem Avatar als virtuelle Person 12, insbesondere als User Interface, eine entsprechende Hintergrundgeschichte beziehungsweise Vergangenheit mit, dass es beispielsweise eine geduldige, fleißige Mutter von zwei Kindern ist und Vollzeit arbeitet, diese aber sehr vermisst und aus einem kleinen Dorf in der Ukraine stammt und sich selbst alleine mit Fleiß und Intellekt in einer Firma hochgearbeitet hat und nun sehr stolz ist bei einem Innovationcenter als Guide angestellt worden zu sein, so wird daraus das notwendige Aussehen der virtuellen Person 12 klar und auch die Antworten auf Fragen mit Emotionen angereichert. Die reale Person 14 unterhält sich somit mit der virtuellen Person 12 und interagiert nicht mit einem reinen digitalen Assistenten.

So wird für jeden "prompt" an die generative künstliche Intelligenz 38 die Hintergrundgeschichte und die Persönlichkeit ergänzt und bei einer Frage angewiesen, diese Persönlichkeit mit der passenden Emotion anzureichern, die von der virtuellen Person 12 anschließend wiedergegeben wird.

Beispielsweise kann bei einer Frage der realen Person 14, wann entsprechende Öffnungszeiten eines Innovationcenters sind, die virtuelle Person 12 eine Antwort geben, dass in einer Stunde das Innovationcenter geschlossen wird, dabei lächelt die virtuelle Person 12 und ergänzt, dass dadurch zeitlich auch die Kinder der virtuellen Person 12 abgeholt werden können. Gegenüber dem Stand der Technik würde eine Reaktion beispielsweise nur beinhalten, dass in einer Stunde das Innovationcenter geschlossen ist.

### Bezugszeichenliste

- 10: System
- 12: virtuelle Person
- 14: reale Person
- 16: elektronische Recheneinrichtung
- 18: Ausgabeeinrichtung
- 20: Anzeigeeinrichtung
- 22: Mikrofoneinrichtung
- 24: Interaktion
- 26: digitales Modell
- 28: Anpassungseingabe
- 30: Persönlichkeitsprofil
- 32: Eingabe
- 34: Erfassungseinrichtung
- 36: Reaktion
- 38: künstliche Intelligenz
- 40: Einsatzort

## Patentansprüche

1. Verfahren zum Generieren einer virtuellen Person (12) für eine Interaktion (24) mit einer realen Person (14) mittels eines Systems (10) zur Ausgabe der virtuellen Person (12), mit den Schritten:
- Bereitstellen eines digitalen Modells (26) für virtuelle Personen (12) mittels einer elektronischen Recheneinrichtung (16) des Systems (10);
- Erfassen einer Anpassungseingabe (28) von einem Nutzer der elektronischen Recheneinrichtung (16), wobei die Anpassungseingabe (28) zumindest einem virtuellen Persönlichkeitsparameter für die virtuelle Person (12) entspricht;
- Anpassen eines Persönlichkeitsprofils (30) des digitalen Modells (26) in Abhängigkeit von der Anpassungseingabe (28) zur virtuellen Person (12) mittels der elektronischen Recheneinrichtung (16);
- Übermitteln der virtuellen Person (12) mit dem angepassten Persönlichkeitsprofil (30) an eine Ausgabeeinrichtung (18) des Systems (10); und
- Ausgeben der virtuellen Person (12) zur Interaktion (24) mit der realen Person (14) mittels der Ausgabeeinrichtung (18) .

2. Verfahren nach Anspruch 1, **dadurch gekennzeichnet, dass** die Ausgabeeinrichtung (18) als Anzeigeeinrichtung (20) bereitgestellt wird.

3. Verfahren nach Anspruch 2, **dadurch gekennzeichnet, dass** die virtuelle Person (12) als Avatar angezeigt wird.

4. Verfahren nach einem der vorhergehenden Ansprüche, **dadurch gekennzeichnet, dass**
eine Eingabe (32) der realen Person (14) mittels einer Erfassungseinrichtung (34) des Systems (10) erfasst wird und eine Reaktion (36) der virtuellen Person (12) in Abhängigkeit von der Eingabe (32) und in Abhängigkeit von dem angepassten Persönlichkeitsprofil (30) ausgegeben wird.

5. Verfahren nach Anspruch 4, **dadurch gekennzeichnet, dass** eine Spracheingabe der realen Person (14) und/oder eine Gestik der realen Person (14) und/oder eine Mimik der realen Person (14) als Eingabe (32) erfasst wird.

6. Verfahren nach Anspruch 4 oder 5, **dadurch gekennzeichnet, dass**
eine Sprachausgabe der virtuellen Person (12) und/oder eine Gestik der virtuellen Person (12) und/oder eine Mimik der virtuellen Person (12) in Abhängigkeit von der Eingabe (32) als Reaktion (36) angepasst wird.

7. Verfahren nach einem der vorhergehenden Ansprüche, **dadurch gekennzeichnet, dass**
mittels einer künstlichen Intelligenz (38) der elektronischen Recheneinrichtung (16) das Persönlichkeitsprofil (30), insbesondere kontinuierlich, angepasst wird.

8. Verfahren nach einem der vorhergehenden Ansprüche, **dadurch gekennzeichnet, dass**
ein Verhalten der realen Person (14) erfasst und gespeichert wird und das Persönlichkeitsprofil (30) der virtuellen Person (12) in Abhängigkeit von dem erfassten Verhalten angepasst wird.

9. Verfahren nach einem der vorhergehenden Ansprüche, **dadurch gekennzeichnet, dass**
als Anpassungseingabe (28) eine virtuelle Hintergrundgeschichte für die virtuelle Person (12) eingegeben wird.

10. Verfahren nach einem der vorhergehenden Ansprüche, **dadurch gekennzeichnet, dass**
ein Einsatzort (40) der virtuellen Person (12) erfasst wird und das Persönlichkeitsprofil (30) in Abhängigkeit von dem Einsatzort (40) angepasst wird.

11. Verfahren nach einem der vorhergehenden Ansprüche, **dadurch gekennzeichnet, dass**
in einem Einsatzort (40) der virtuellen Person (12) eine Vielzahl von Ausgabeeinrichtungen (18) bereitgestellt wird und die virtuelle Person (12) mittels der Vielzahl von Ausgabeeinrichtungen (18) ausgegeben wird.

12. Verfahren nach Anspruch 11, **dadurch gekennzeichnet, dass** an den unterschiedlichen Ausgabeeinrichtungen (18) mit unterschiedlichen realen Personen (14) interagiert wird.

13. Computerprogrammprodukt mit Programmcodemitteln, welche eine elektronische Recheneinrichtung (16) dazu veranlassen, wenn die Programmcodemittel von der elektronischen Recheneinrichtung (16) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. System (10) zum Generieren einer virtuellen Person (12) für eine Interaktion (24) mit einer realen Person (14), mit zumindest einer elektronischen Recheneinrichtung (16) und einer Ausgabeeinrichtung (18), wobei das System (10) zum Durchführen eines Verfahrens nach einem der Ansprüche 1 bis 12 ausgebildet ist.
